# EUROPÄISCHE PATENTSCHRIFT

(11) **EP 3 086 911 B1**
(45) Veröffentlichungstag und Bekanntmachung des Hinweises auf die Patenterteilung: **07.11.2018**
(21) Anmeldenummer: 14828461.5
(22) Anmeldetag: 22.12.2014
(51) Int. Cl.: B27D 5/00, B29C 65/48, B29C 63/00, B29C 65/08, B29C 65/16, B29C 65/00, B29C 47/06, B29K 23/00, B29L 31/44, C09J 123/12, C08L 23/12

(54) **KANTENLEISTE**
EDGE STRIP
BANDE DE CHANT

(30) Priorität: 23.12.2013 DE 102013022086
(43) Veröffentlichungstag der Anmeldung: 02.11.2016
(73) Patentinhaber: MKT Moderne Kunststoff-Technik Gebrüder Eschbach Gmbh, 99885 Ohrdruf/Thüringen (DE)
(72) Erfinder: STREICHARDT, Thomas, 48231 Warendorf (DE); MURICI, Naim, 45964 Gladbeck (DE)
(74) Vertreter: Maikowski & Ninnemann Patentanwälte Partnerschaft mbB
(86) Internationale Anmeldenummer: PCT/EP2014/079016
(87) Internationale Veröffentlichungsnummer: WO 2015/097163

(56) Entgegenhaltungen:
- EP-A1- 2 366 540
- DE-U1-202013 011 790
- US-A- 3 220 966

## Beschreibung

Die Erfindung betrifft eine Kantenleiste insbesondere für Möbelplatten, umfassend eine Schmelzschicht, die aus mindestens einem leicht fließenden Polyolefin besteht und deren Fließverhalten über den Schmelzflussindex der in der Schmelzschicht verwendeten Polyolefine gesteuert werden kann. Die Erfindung betrifft ferner eine Möbelplatte, die mit einer solchen Kantenleiste verbunden ist.

Thermoplastische Kanten zum Verschließen von offenen Spanplatten, insbesondere Fronten, Arbeitsplatten, Korpusse, Einlegeböden und Wangensysteme gehören zum Stand der Technik. Als Material für die Kanten werden zum Beispiel PVC-, ABS-, PP- oder PMMA-Kunststoffe verwendet. Übliche Wandstärken derartiger Kantenleisten betragen 0,4 - 3 mm.

Die Begriffe "Kantenleiste" und "Kantenband" werden im Sinne der vorliegenden Erfindung als Synonyme verwendet.

Solche thermoplastischen Kanten können gemäß dem Stand der Technik mit einem Schmelzkleber auf Spanplatten geklebt werden. Die Verklebung der Kantenleiste auf der Schnittkante der Spanplatte erfolgt dabei vollflächig.

Um den Aufwand zu verringern, der mit dem Aufbringen des Schmelzklebers bei der Verarbeitung solcher thermoplastischer Kanten verbunden ist, sind im Stand der Technik Kantenleisten beschrieben, die eine Schmelzschicht umfassen. Dies ermöglicht, dass die Kantenleiste beispielsweise mittels Lasertechnik oder anderen Verfahren zum Energieeintrag mit einem Holzwerkstoff verschweißt wird. EP2366540 A1 offenbart eine Schmelzschicht für eine mehrschichtige Kantenleiste für Möbelplatten, die ein leicht fließendes Homopropylen mit MIF>50 dg/min enthält.

Um eine gute Haftung der Kantenleiste auf dem Holzwerkstoff zu ermöglichen, wird dabei der Polarität des Kunststoffmaterials, auf dem die Schmelzschicht basiert, hohe Bedeutung beigemessen. So beschreibt die DE 20 2007 011 911 U1 eine Kantenleiste, umfassend eine Schmelzschicht, wobei die Schmelzschicht sowohl polare als auch unpolare Anteile im Molekülaufbau enthält. Durch diese Maßnahme soll ein besonders wirksames Verkleben der Kantenleiste mit dem Holzwerkstoff erreicht werden. Typischerweise basiert die Schmelzschicht dabei auf einem Propfcopolymer, insbesondere einem Maleinsäureanhydrid-gepfropften Polypropylen.

Diese Ausbildung der Schmelzschicht ist mit Nachteilen verbunden. So führt die Notwendigkeit, das Polymermaterial der Schmelzschicht mittels einer Propfcopolymerisation zu modifizieren, zu einem erhöhten Kostenaufwand. Darüber hinaus weist das Ergebnis der Verklebung der Kantenleiste mit einem Holzwerkstoff bei Verwendung dieser Materialien oft Schwachstellen auf, was insbesondere an den Eckverbindungen (Verschweißung Kante/Kante) zu einer unzureichenden Wasser- und Wasserdampfbeständigkeit führt.

Der vorliegenden Erfindung lag daher die Aufgabe zugrunde, eine Kantenleiste bereit zu stellen, die gegenüber dem Stand der Technik wirtschaftliche Vorteile aufweist und zugleich eine bessere Verklebung ermöglicht.

Die Lösung der Aufgabe der Erfindung erfolgt durch eine Kantenleiste gemäß der Lehre nach Patentanspruch 1, wobei die Unteransprüche 2 bis 14 mindestens zweckmäßige Ausgestaltungen und Weiterbildungen umfassen. Die Lösung der Aufgabe erfolgt darüber hinaus auch durch eine Möbelplatte gemäß einem der Ansprüche 15 oder 16.

Es wird demnach eine Kantenleiste bereit gestellt, insbesondere für Möbelplatten, die eine Schmelzschicht umfasst, wobei die Schmelzschicht ein thermoplastisches Polymer umfasst, das aus unpolaren Monomereinheiten aufgebaut ist. Vorzugsweise handelt es sich bei dem thermoplastischen Polymer, dass aus unpolaren Monomereinheiten aufgebaut ist, um ein leicht fließendes Polyolefin, wie in Anspruch 1 definiert.

Es hat sich überraschend gezeigt, dass entgegen dem in der Fachwelt verbreiteten Vorurteil, dass bei der Ausbildung einer guten Klebeverbindung einer Kantenleiste mit einem Holzwerkstoff eine Schmelzschicht benötigt wird, die auf einem Polymer basiert, das sowohl polare als auch unpolare Anteile im Molekülaufbau enthält, ausgezeichnete Ergebnisse mit einer Kantenleiste erzielt werden können, deren Schmelzschicht ein thermoplastisches Polymer umfasst, dass lediglich aus unpolaren Monomereinheiten aufgebaut ist. Es hat sich gezeigt, dass eine solche Kantenleiste entgegen der Lehre der DE 20 2007 011 911 U1, eine ausgezeichnete Verbindung einer Kantenleiste mit einem Holzwerkstoff ermöglicht.

Der Begriff unpolare Monomereinheiten ist dem Fachmann bekannt. Im Sinne der vorliegenden Erfindung soll der Begriff thermoplastisches Polymer, das aus unpolaren Monomereinheiten aufgebaut ist, insbesondere ein thermoplastisches Polymer beschreiben, dass ein Homopolymer oder Copolymer aus Polyolefinen ist.

Polarität bezeichnet in der Chemie eine durch Ladungsverschiebung in Atomgruppen entstandene Bildung von getrennten Ladungsschwerpunkten, die bewirken, dass eine Atomgruppe nicht mehr elektrisch neutral ist. Das elektrische Dipolmoment ist ein Maß für die Polarität eines Moleküls. Ein polarer Stoff besteht aus polaren Molekülen, welche sich durch ein permanentes elektrisches Dipolmoment auszeichnen. Ein unpolares oder apolares Molekül dagegen besitzt kein permanentes Dipolmoment.

In einer besonders bevorzugten Ausführungsform betrifft die vorliegende Erfindung eine Kantenleiste, insbesondere für Möbelplatten, umfassend eine Schmelzschicht, die ein thermoplastisches Polyolefin umfasst.

In einer ganz besonders bevorzugten Ausführungsform stellt die Erfindung eine Kantenleiste bereit, die eine Schmelzschicht umfasst, die aus mindestens einem thermoplastischen Polyolefin besteht bzw. deren Polymerbasis aus mindestens einem thermoplastischen Polyolefin besteht und die optional weitere Komponenten, insbesondere in Form von Pigmenten, Füllstoffen, Additiven umfasst.

Vorzugsweise handelt es sich bei dem thermoplastischen Polyolefin um ein Homo- oder Copolymer aus Ethylen, Propylen und/oder Butylen. Am stärksten bevorzugt handelt es sich bei dem thermoplastischen Olefin um ein Homopolymer aus Propylen oder um ein Copolymer aus Polypropylen und Polyethylen.

Es hat sich überraschenderweise gezeigt, dass eine solche Kantenleiste hervorragende Ergebnisse bei der Verklebung bzw. Verbindung mit einem Holzwerkstoff ergibt. Die Verklebung bzw. Verbindung kann dabei durch jede beliebige Art des Energieeintrages erfolgen. In einer besonders bevorzugten Ausführungsform erfolgt das Verkleben bzw. Verbinden der Kantenleiste mit einem Holzwerkstoff durch Einwirkung von Laser, Einwirkung von Heißluft, Einwirkung von Plasma, Einwirkung von Ultraschall oder jede beliebige andere Technologie des Energieeintrages. Am stärksten bevorzugt erfolgt das Verkleben bzw. Verbinden der Kantenleiste mit dem Holzwerkstoff durch Einwirkung eines Lasers.

Beim Laserverschweißen erfolgt eine Fokussierung der Laserstrahlung mittels geeigneter Optiken, wodurch ein Aufschmelzen der Schmelzschicht stattfindet. Dadurch gelingt das Verschweißen der Kantenleiste mit einem Substrat. In einer ähnlichen Weise kann das Aufschmelzen der Schmelzschicht auch durch Plasma erfolgen.

Beim Ultraschallschweißvorgang wird die zum Schweißen benötigte Energie durch Ultraschallschwingungen erzeugt. Die Ultraschallschwingungen versetzen das Polyolefin-Material an den entsprechenden Stellen in eine Molekularbewegung mit der Folge einer Reibung, die wiederum zum Aufschmelzen des Kunststoffs führt.

Ein solches Aufschmelzen des Polyolefin-Materials zum Zwecke des Verschweißens ist auch über das gezielte Anwenden von Heißluft möglich.

Darüber hinaus sind auch noch weitere Verfahren bekannt, mit denen das Polyolefin der Schmelzschicht durch Energieeintrag aufgeschmolzen werden kann, um nachfolgend eine Verschweißung mit einem Substrat zu ermöglichen.

Es hat sich gezeigt, dass die Verarbeitungseigenschaften, insbesondere die Fließfähigkeit der Schmelzschicht der erfindungsgemäßen Kantenleiste sehr gut über den Schmelzflussindex des Polymers, auf dem die Schmelzschicht basiert, gesteuert werden können. In einer bevorzugten Ausführungsform weist das thermoplastische Polymer, auf dem die Schmelzschicht basiert, einen Schmelzflussindex (MFI) von 100 g/10 min oder höher, besonders bevorzugt oberhalb von 100 g/10 min (nach ISO 1133, 230°C, 2,16 kg) auf. Es wurden besonders gute Ergebnisse erzielt, wenn das thermoplastische Polymer, auf dem die Schmelzschicht basiert, einen Schmelzflussindex (MFI) von >= 1000 g/10 min (nach ISO 1133, 230°C, 2,16 kg), insbesondere von 1000 bis 1500 g/10 min (nach ISO 1133, 230°C, 2,16 kg) und besonders bevorzugt einen Schmelzflussindex (MFI) von etwa 1200 g/10 min (nach ISO 1133, 230°C, 2,16 kg) aufweist.

Thermoplastische Polymere, die einen Schmelzflussindex mit den zuvor genannten Werten oder in den zuvor genannten Bereichen aufweisen, haben die vorteilhafte Eigenschaft, dass sie leicht fließend sind.

Es hat sich insbesondere gezeigt, dass sich die Verwendung von thermoplastischen Polymeren mit einem Schmelzflussindex < 100 g/10 min (nach ISO 1133, 230°C, 2,16 kg) in der Schmelzschicht nachteilig auf die Verarbeitungseigenschaften der erfindungsgemäßen Kantenleiste auswirkt, da die Schmelzschicht dann nicht mehr ausreichend leicht fließfähig ist. Dies ist insbesondere dann der Fall, wenn die Polymerbasis der Schmelzschicht aus thermoplastischen Polymeren besteht, die aus unpolaren Monomeren aufgebaut sind

Die Erfindung stellt deshalb in einer bevorzugten Ausführungsform eine Kantenleiste bereit, die eine Schmelzschicht umfasst, deren Polymerbasis aus mindestens einem leicht fließenden thermoplastischen Polymer, vorzugsweise aus mindestens einem leicht fließenden Polyolefin, besteht, wobei die Schmelzschicht optional noch weitere Komponenten, insbesondere in Form von Pigmenten, Füllstoffen, Additiven umfasst.

In einer ganz besonders bevorzugten Ausführungsform besteht die Schmelzschicht also auf einer komplett unpolaren Polymerbasis.

Es hat sich gezeigt, dass durch die Wahl solcher MFI-Werte für das thermoplastische Polymer der Schmelzschicht eine Verbesserung der Verklebung bzw. der Verbindung mit dem Holzwerkstoff erreicht werden kann, da die Durchdringung des Holzwerkstoffes durch das Polymer der Schmelzschicht verbessert wird.

In Abhängigkeit von der Art des Holzwerkstoffes kann dabei der MFI-Wert des thermoplastischen Polymers der Schmelzschicht gewählt werden, um ein optimales Ergebnis zu erzielen. Mit steigenden MFI-Werten werden sowohl die Fließtiefen des Polymers in den Holzwerkstoff als auch die Haftungseigenschaften der Kantenleiste erhöht und damit verbessert. Eine höhere Fließtiefe besitzt den Vorteil, dass die in der Praxis üblicherweise vorhandenen Risse im Deckmaterial der Möbelplatte durch das eingeflossene Schmelzschicht-Material besser verfüllt werden. Dadurch wird die Wasser- und Wasserdampf-Beständigkeit der mit den erfindungsgemäßen Kantenbändern versehenen Platten erhöht und damit die Gefahr von Quellungen der Holzwerkstoffplatten reduziert.

In einer besondere bevorzugten Ausführungsform umfasst die Schmelzschicht der erfindungsgemäßen Kantenleiste einer Mischung bzw. Kombination von thermoplastischen Polymeren die aus unpolaren Monomereinheiten aufgebaut sind, mit verschiedenen Schmelzflussindizes. Bei einer besonders bevorzugten Ausführungsform weist dabei eine der Polymerkomponenten der Schmelzschicht einen Schmelzflussindex von etwa 50 bis etwa 200 g/10 min, vorzugsweise von 100 g/10 min. oder höher, besonders bevorzugt von 100 bis 200 g/10 min. (nach ISO 1133, 230°C, 2,16 kg) auf und die andere einen Schmelzflussindex von etwa 1000 bis 1500 g/10 min, vorzugsweise 1200 g/10 min. (nach ISO 1133, 230°C, 2,16 kg) auf.

Besonders bevorzugt ist es, wenn der Schmelzflußindex (MFI) der Mischung oder Kombination von thermoplastischen Polymeren, die aus unpolaren Monomereinheiten aufgebaut sind, 200 g/10min oder höher ist, vorzugsweise im Bereich von 400 g/10min bis 1000 g/ 10min (nach ISO 1133, 230°C, 2,16 kg) liegt.

Der gewünschte MFI der Schmelzschicht kann durch die Wahl eines geeigneten Mischungsverhältnisses der verschiedenen Polymere mit unterschiedlichen MFI eingestellt werden. Ein bevorzugtes Mischungsverhältnis ist beispielsweise das Verhältnis Homopolypropylen (MFI 1200) : Homopolypropylen (MFI 120) wie 25 : 75.

Durch eine solche Mischung aus Polymeren mit verschiedenen Schmelzflussindizes kann eine optimale Anpassung der Kantenleiste an verschiedene Holzwerkstoffe erfolgen. Optimale Anpassung bedeutet die Steuerung der Fließfähigkeit der Schmelzschicht der erfindungsgemäßen Kantenleiste und damit verbunden, die Verbesserung der Haftung der Kantenleiste an der Kante der Möbelplatte.

Ein wesentlicher Gesichtspunkt ist dabei die Porengröße des jeweiligen Holzwerkstoffes. Je größer die Porengröße des jeweiligen Holzwerkstoffes ist, desto stärker lässt sich die Verklebung oder Verbindung der erfindungsgemäßen Kantenleiste durch eine Erhöhung des Anteils des Polymers mit dem höheren Schmelzflussindex verbessern. So weisen beispielsweise Spanplatten im Vergleich zu MDF-Platten (Mitteldichte Faserplatten) deutlich größere Hohlräume auf, die von der Schmelze der Schmelzschicht ausgefüllt werden müssen. Um eine optimale Verklebung oder Verbindung mit Holzwerkstoffen einer größeren Porendichte zu ermöglichen, kann ein Polymer mit höheren Schmelzpunktindex gewählt werden, oder das Mischungsverhältnis von zwei Polymeren zum Polymer mit höherem Schmelzpunktindex verschoben werden. Dadurch wird die Fließfähigkeit der Schmelzschicht erhöht und gleichzeitig die Eindringtiefe des Polymers in den Holzwerkstoff verbessert. Auf diese Art und Weise steht also eine Steuerungsmöglichkeit zur Verfügung, mit der die erfindungsgemäße Kantenleiste individuell auf bestimmte Holzwerkstoffe hin optimiert werden kann.

Auf diese Weise erreichen die erfindungsgemäßen Kantenleisten ein besseres Verklebungsverhalten oder Verbindungsverhalten mit den Holzwerkstoffen als die im Stand der Technik beschriebenen Kantenleisten, ohne das teure Propfcopolymere eingesetzt werden müssen.

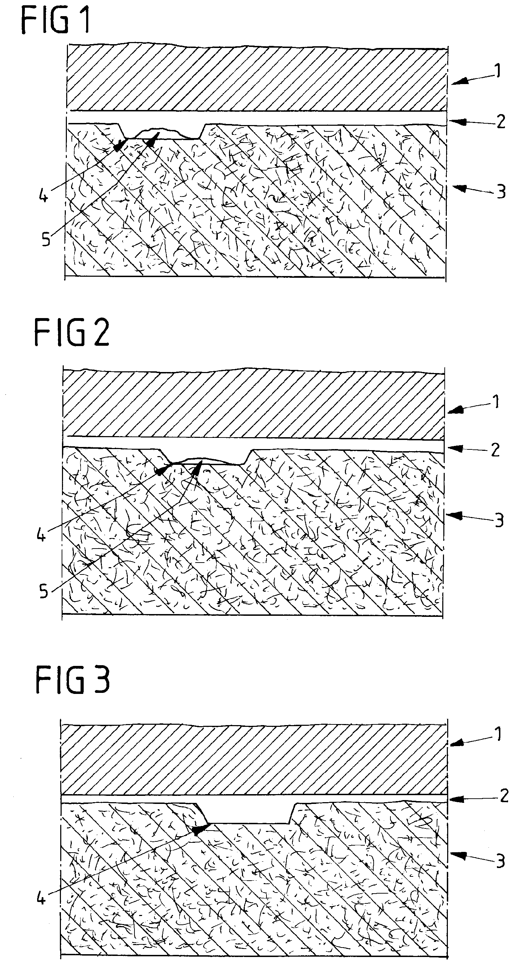

Der Vorteil der Verwendung von Mischungen bzw. Kombinationen von Polymeren mit unterschiedlichen MFI-Werten in der Schmelzschicht besteht darin, dass mit Polymeren unterschiedlicher MFI-Werte sowohl die Eindringtiefe als auch die Haftung der Kante zur Platte beeinflusst werden kann. Mit steigenden MFI-Werten dieser Mischungen bzw. Kombinationen werden sowohl die Fließtiefen als auch die Haftungseigenschaften nicht nur erhöht und damit verbessert, sondern die Fließtiefen und Haftungseigenschaften sind auch besser steuerbar. Mit den Mischungen bzw. Kombinationen von Polymeren mit unterschiedlichen MFI-Werten in der Schmelzschicht treten die Vorteile der erfindungsgemäßen Kantenleiste noch deutlicher hervor, nämlich dass die in der Praxis üblicherweise vorhandenen Risse im Deckmaterial der Platte durch das eingeflossene Schmelzschicht-Material besser verfüllt werden können. Gleichzeitig nimmt die Rest-Dicke der Schmelzschicht mit steigendem MFI des Materials, aus dem die Schmelzschicht besteht, durch das verbesserte Fließen der Schmelzschicht teilweise deutlich ab (siehe Figuren 1 bis 3). Dabei entsteht ein größerer "Schmelzewulst" zwischen Platte und Kantenleiste, der sich wiederum vorteilhaft auf die Abdichtung der Platte durch die Kante auswirkt. Dadurch können die Wasser- und Wasserdampfbeständigkeit der mit den Kantenbändern versehenen Platten erhöht und damit die Gefahr von Quellungen der Holzwerkstoffplatten reduziert werden.

Beide Effekte können sich aber auch negativ auswirken. Durch ein zu hohes Fließen der Schmelzschicht kann durch die Erdanziehungskraft eine unterschiedlich große "Schmelzewulst" an der Oberseite und der Unterseite der mit der Kantenleiste versehenen Holzwerkstoffplatte entstehen. An der Unterseite fließt das Material der Schmelzschicht nach unten von der Platte weg und die "Schmelzewulst" an der Unterseite der Platte wird nur unzureichend ausgebildet. Die Abdichtung und damit die Beständigkeit gegen Wasser- und insbesondere gegen Wasserdampf-Quellungen an der Unterseite kann geringer als an der Oberseite ausfallen. Es hat sich deshalb als vorteilhaft herausgestellt, wenn eine Rest-Dicke der Schmelzschicht von >0,02 mm, vorzugsweise >0,05 mm, besonders bevorzugt >0,08 mm, ganz besonders bevorzugt > 0,1 mm an der mit der Kantenleiste versehenen Platte vorhanden ist. Struktur- bzw. Oberflächenunterschiede der Kante der Holzwerkstoffplatte können dadurch ebenfalls besser ausgeglichen werden. Ferner werden Spannungen (durch z.B. unterschiedliche Gebrauchs- und Lagertemperaturen) zwischen Platte und Kunststoffkante aufgenommen, wodurch die Dauergebrauchseignung verbessert wird. Die Restdicke der Schmelzschicht kann durch Wahl bzw. Kombination der thermoplastischen Polymere der Polymerbasis der Schmelzschicht mit geeigneten MFI-Werten gesteuert werden.

Verbindung im Sinne der Erfindung bedeutet, dass die Polymere der aufgeschmolzenen Schmelzschicht beim Anbringen der erfindungsgemäßen Kantenleiste an die Möbelplatte in die in den Holzwerkstoffen vorhandenen Hohlräume und Poren eindringen und beim Erkalten so erstarren, dass diese Hohlräume und Poren mit dem leicht fließenden Polymer ausgefüllt, vorzugsweise vollständig ausgefüllt sind. Dadurch erfolgt neben einer stoffschlüssigen Verbindung, wie dem Verkleben im herkömmlichen Sinne, zusätzlich eine formschlüssige Verbindung zwischen der Kantenleiste, insbesondere deren Schmelzschicht, und dem Holzwerkstoff der Möbelplatte. Gleichzeitig kann es auch möglich sein, dass die unpolare Polymerbasis, aus der die Schmelzschicht besteht, eine Schweißverbindung mit dem in der Holzwerkstoffplatte enthaltenen Lignin eingeht, da Lignin auch thermoplastische Eigenschaften besitzt.

Da die erfindungsgemäße Kantenleiste keine polaren Gruppen und vorzugsweise auch keine reaktiven Gruppen in der Polymerbasis der Schmelzschicht enthält, erfolgt die Verbindung der erfindungsgemäßen Kantenleiste, insbesondere deren Schmelzschicht, vorzugsweise überwiegend formschlüssig, besonders bevorzugt ausschließlich formschlüssig.

Die zusätzliche formschlüssige oder überwiegend oder ausschließlich formschlüssige Verbindung zwischen der Kantenleiste und dem Holzwerkstoff der Möbelplatte hat Vorteile. Insbesondere wird die Haftung der erfindungsgemäßen Kantenleiste an der Möbelplatte so stark erhöht, dass ein zerstörungsfreies Ablösen der Kantenleiste von dem Möbelstück in der Regel nicht mehr möglich ist. Gleichzeitig erfolgt ein verbesserter Verschluss des Kantenbereichs der Möbelplatte, wodurch die Wasser- und Wasserdampf-Beständigkeit der mit den erfindungsgemäßen Kantenbändern versehenen Platten erhöht und damit die Gefahr von Quellungen der Holzwerkstoffplatten reduziert wird.

Ein weiterer Vorteil der erfindungsgemäßen Kantenleiste besteht darin, dass die Rezyklierungseigenschaften stark verbessert werden. Üblicherweise weisen Kantenleisten für Möbelplatten eine Ober- bzw. Dekorschicht auf, die aus einem Homopolymer wie beispielsweise Polypropylen besteht. Bei Ausbildung einer Kantenleiste mit einer solchen Ober- bzw. Dekorschicht aus Polypropylen und einer Schmelzschicht, die auf einem Propfcopolymer basiert, entsteht eine Materialmischung, die eine Rezyklierung solcher Kantenleisten erschwert oder gar unmöglich macht. Die erfindungsgemäße Kantenleiste kann hingegen so ausgestaltet werden, dass die Ober- bzw. Dekorschicht und die funktionelle Schmelzschicht auf dem gleichen Polymer basiert, sodass eine einfache Rezyklierung der Verbundleiste möglich ist.

In einer weiteren bevorzugten Ausführungsform stellt die Erfindung eine Kantenleiste bereit, die eine Schmelzschicht umfasst, deren Polymerbasis aus einer Mischung bzw. Kombination von mindestens zwei Copolymeren des Polypropylens oder einer Kombination von mindestens einem Homopolypropylen und mindestens einem Copolymer des Propylens besteht, wobei die Schmelzschicht optional weitere Komponenten, insbesondere in Form von Pigmenten, Füllstoffen, Additiven umfasst.

Vorzugsweise weisen die in dieser Kombination enthaltenen verschiedenen Homopolypropylene und Copolymere des Propylens unterschiedliche Schmelzflußindices (MFI) auf, wobei die Homopolypropylene Schmelzflußindices im Bereich von 100 g/10 min bis 1500 g/10 min, vorzugsweise im Bereich von 100 g/10 min bis 1200 g/10min (nach ISO 1133, 230°C, 2,16 kg) aufweisen und die Copolymere des Propylens Schmelzflußindices von 3 g/10 min oder höher, vorzugsweise 50 g/10 min oder höher, besonders bevorzugt 100 g/10 min oder höher (nach ISO 1133, 230°C, 2,16 kg) aufweisen.

Besonders bevorzugt ist es, wenn der Schmelzflußindex (MFI) der Mischung oder Kombination von Homopolypropylenen und Copolymeren des Propylens 100 g/10min oder höher, vorzugsweise 200 g/10min oder höher ist, besonders bevorzugt im Bereich von 400 g/10min bis 1000 g/ 10min (nach ISO 1133, 230°C, 2,16 kg) liegt.

Bei den Copolymeren, die in dieser Mischung oder Kombination verwendet werden, handelt es sich in einer ganz besonder bevorzugten Ausführungsform um Copolymere aus Ethylen und Propylen.

Die Kombination von Homopolypropylenen mit Copolymeren auf Basis von Polypropylen und Polyethylen in der Schmelzschicht der erfindungsgemäßen Kantenleiste hat mehrere Vorteile.

Mit der Kombination von Homopolypropylenen mit Copolymeren auf Basis von Polypropylen und Polyethylen kann das Elastizitätsmodul (E-Moduls) der Schmelzschicht verringert werden. Das Elastizitätsmodul ist ein Materialkennwert aus der Werkstofftechnik, der den Zusammenhang zwischen Spannung und Dehnung bei der Verformung eines festen Körpers bei linear elastischem Verhalten beschreibt. Der Betrag des Elastizitätsmoduls ist umso größer, je mehr Widerstand ein Material seiner elastischen Verformung entgegensetzt. Eine Schmelzschicht aus einem Material mit hohem Elastizitätsmodul ist also steifer und ggf. spröder als eine Schmelzschicht, die aus einem Material mit niedrigem Elastizitätsmodul besteht. Eine Verringerung des Elastizitätsmoduls durch Kombination von Homopolypropylenen mit Copolymeren auf Basis von Polypropylen und Polyethylen in der Schmelzschicht führt also zu einer höheren Flexibilität der Kantenleiste, insbesondere der Schmelzschicht selbst.

In der Schmelzschicht der erfindungsgemäßen Kantenleiste können beispielsweise Homopolypropylene zum Einsatz kommen, die ein Elastizitätsmodul von 1500 MPa haben. Die eingesetzten Polypropylen-Polyethylen-Copolymere haben beispielsweise ein Elastizitätsmodul von 700 MPa. Vorzugsweise kann das Elastizitätsmodul der Schmelzschicht durch Wahl eines geeigneten Mischungsverhältnisse von Homopolypropylen zu Polypropylen-Polyethylen-Copolymer auf 1400 MPa oder geringer, 1200 MPa oder geringer, 1000 MPa oder geringer, vorzugsweise 950 MPa oder geringer, oder besonders bevorzugt auf 800 MPa oder geringer verringert werden.

Dies ist insbesondere von Bedeutung beim Auftreten von Temperaturschwankungen. Die Wärmeausdehnungskoeffizienten der Holzwerkstoffplatte und der Kantenleiste sind unterschiedlich. Dadurch kommt es bei Temperaturschwankungen zu einer unterschiedlichen Materialausdehnung der Holzwerkstoffplatte und der mit der Schmelzschicht verbundenen Oberschicht der Kantenleiste. Dies kann zu Spannungen in der Kantenleiste und zu erhöhter Einwirkung von Zugkräften auf die Schmelzschicht der Kantenleiste führen. Bei herkömmlichen Kantenleisten können häufig auftretende Temperaturschwankungen nach und nach zum mindestens teilweisen Aufbrechen der Verbindung der Kantenleiste zu der Holzwerkstoffplatte und damit nach und nach zum Ablösen der Kantenleiste von der Holzwerkstoffplatte führen. Dadurch kann Wasser und Wasserdampf in die Holzwerkstoffplatte eindringen. Diese Nachteile können mit der erfindungsgemäße Kantenleiste, deren Schmelzschicht ein verringertes Elastizitätsmodul aufweist, überwunden werden. Durch die höhere Elastizität der Schmelzschicht können bei Temperaturschwankungen an der Kantenleiste auftretende Spannungen und Zugkräfte durch die Kantenleiste, insbesondere deren Schmelzschicht, besser aufgenommen werden und das Aufbrechen der Verbindung zwischen Kantenleiste und Holzwerkstoffplatte kann minimiert bzw. verhindert werden.

Die höhere Flexibilität einer solchen erfindungsgemäßen Kante hat auch Vorteile gegenüber den herkömmlichen Kanten bei der Radienverarbeitung. Zusätzlich zu den oben beschriebenen Maßnahmen und Wirkungen des Zusatzes von Energie-absorbierenden Zusatzstoffe und Pigmenten, vorzugsweise Licht und/oder Strahlung sowie Wärme absorbierenden Zusatzstoffen, mineralische Füllstoffen oder Metallpartikeln wird die Steifigkeit der gesamten Kante im Verarbeitungsprozess insbesondere für die Verarbeitung in Radien durch die erhöhte Flexibilität der Schmelzschicht noch weiter verringert und eine weiter verbesserte Verformbarkeit der Kantenleiste beim Aufbringen der Kantenleiste auf die Möbelplatte geschaffen.

Das Aufbringen von Kantenleisten auf die Kanten von Holzwerkstoffplatten wird unter Einwirkung von Druck und Temperatur durchgeführt. Beim Anpressen der Kantenleiste, deren Schmelzschicht unter Temperatureinwirkung, beispielsweise mittels Laser, aufgeschmolzen wurde, dringt ein Teil des aufgeschmolzenen Materials der Schmelzschicht in die Hohlräume und Poren des Holzwerkstoffs ein, ein weiterer Teil tritt seitlich an den oberen und unteren Rändern der Holzwerkstoffplatte aus und ein weiterer Teil des Materials der Schmelzschicht verbleibt zwischen Holzwerkstoff und der Oberschicht der Kantenleiste . Nach dem Erkalten und Erstarren muss das seitlich ausgetretene Material, zusammen mit etwaigen überstehenden Teilen der Kantenleiste, abgefräst werden. Bei diesem Abfräsen werden gleichzeitig oder nachträglich die Kanten der Kantenleiste nachbearbeitet, so dass ein optisch akzeptabler Übergang zwischen der Oberfläche der Möbelplatte und der Kantenleiste hergestellt wird. Bei herkömmlichen Kanten, die ein höheres Elastizitätsmodul aufweisen, kommt es bei diesem Prozess immer wieder zu Beschädigungen der Kantenleiste. Diese können durch Verwendung der erfindungsgemäßen Kantenleiste mit verringertem Elastizitätsmodul verringert bzw. verhindert werden.

Die Verwendung von Copolymeren der Polyolefine der Schmelzschicht führt auch zur Erhöhung der Schlagzähigkeit der erfindungsgemäßen Kantenleiste. Dadurch können Ausbrüche bei der mechanischen Bearbeitung und im Gebrauch deutlich gegenüber herkömmlichen Kantenleisten reduziert werden.

Schließlich bewirkt die Verwendung von Copolymeren der Polyolefine der Schmelzschicht auch eine Herabsetzung der Schmelztemperatur der Schmelzschicht. Dadurch wird einerseits das Fließveralten des Materials der Schmelzschicht noch weiter verbessert. Die Wirkungen und Vorteile eines verbesserten Fließverhaltens der Schmelzschicht wurden oben bereits mehrfach beschrieben. Andererseits ist der Energiebedarf für das Aufschmelzen der Schmelzschicht geringer, was zu hohen Energie- und damit verbunden hohen Kosteneinsparungen beim Anbringen der erfindungsgemäßen Kantenleiste an die Kanten von Holzwerkstoffplatten führt. Alternativ ist es möglich, das Anfahren der Kantenleisten an die Möbelplatten im Produktionsprozess mit einer erhöhten Vorschubgeschwindigkeit durchzuführen, was eine Steigerung der Produktivität des Herstellprozesses der Möbelplatten zur Folge hat.

In der Schmelzschicht der erfindungsgemäßen Kantenleiste können beispielsweise Homopolypropylene zum Einsatz kommen, die eine Schmelztemperatur von 163°C haben. Die eingesetzten Polypropylen-Polyethylen-Copolymere haben beispielsweise haben eine Schmelztemperatur von 130 °C. Vorzugsweise kann die Schmelztemperatur der Schmelzschicht durch Wahl eines geeigneten Mischungsverhältnisse von Homopolypropylen zu Polypropylen-Polyethylen-Copolymer auf 160°C oder geringer, vorzugsweise 150°C oder geringer, oder besonders bevorzugt auf 140°C oder geringer verringert werden.

Ein weiterer Vorteil der erfindungsgemäßen Kantenleiste ist, dass sie eine wesentlich bessere Eckverschweißung beim Aufbringen auf Holzsubstrate ermöglicht. Ein Schwachpunkt der Kantenleisten aus dem Stand der Technik besteht gerade darin, dass an den Stellen, an denen die Schmelzschicht, die sowohl polare als auch unpolare Anteile im Molekülaufbau enthält, mit der, unpolaren Oberschicht einer anderen Kantenleiste zusammentrifft (also einer Ecke des Möbelstückes) eine nur schwache Verklebung gelingt, da die polaren und unpolaren Anteile der zusammentreffenden Kantenleisten nicht miteinander verträglich sind. Diese Schwachstelle der Verklebung führt zu einer verringerten Beständigkeit gegenüber Wasser und Wasserdampf. Durch die erfindungsgemäße Kantenleiste, die sowohl in der Oberschicht als auch in der Unterschicht auf Polyolefinen basiert, die nur aus unpolaren Monomeren aufgebaut sind, treten diese Unverträglichkeiten beim Zusammentreffen von zwei Kantenleisten, wie beispielsweise an der Ecke eines Möbelstücks, nicht auf.

Ferner wird durch die höhere Eindringtiefe des Polymers der erfindungsgemäßen Schmelzschicht in den Holzwerkstoff eine bessere Abdichtung der Oberfläche erreicht. Insbesondere wird so eine bessere Wasserbeständigkeit bzw. Wasserdampfbeständigkeit des so verarbeiteten Materials erreicht.

In einer weiteren Ausführungsform stellt die Erfindung eine Kantenleist bereit, die eine Schmelzschicht umfasst, die aus wenigstens einem leicht fließenden Polyolefin besteht bzw. deren Polymerbasis aus wenigstens einem leicht fließenden Polyolefin besteht und die weitere Komponenten, insbesondere in Form von Pigmenten, Füllstoffen und Additiven umfasst. Die zusätzlichen Komponenten in der Schmelzschicht haben beispielsweise die Funktion, den Energieeintrag, der notwendig ist, um die Schmelzschicht aufzuschmelzen, zu ermöglichen, oder die Schmelzschicht teilweise oder homogen einzufärben. Andere Additive, Pigmente oder Füllstoffe können dazu dienen, die Lichtbeständigkeit, insbesondere die UV-Beständigkeit der Kantenleisten oder die Verarbeitungseigenschaften der Kantenleisten zu verbessern.

Als UV-Schutzmittel geeignete Additive sind beispielsweise organische UV-Absorber, wie Benzophenone, Benzotriazole, Oxalanilide, Phenyltriazine, oder anorganische UV-Absorber, wie Titandioxid,Eisenoxidpigmente, Zinkoxid oder HALS (Hindered Amine Light Stabilizers), wie 2,2,6,6-Tetramethylpiperidin-Derivate wie beispielsweise Bis(2,2,6,6-tetramethyl-4-piperidyl)sebacat.

Antioxidantien dienen der Verhinderung des oxidativen Abbaus der in der Schmelzschicht enthaltenen thermoplastischen Polymere. Geeigenete Antioxidantien sind beispielsweise sterisch gehinderte Amine (hindered amine stabilisers, HAS) aus der Gruppe der Arylamine, sterisch gehinderte Phenolabkömmlinge und Antioxidantien auf Phenol- und Phosphitbasis, wie beispielsweise die kommerzielle erhältlichen Produkte Irganox, Irgafos, Ethanox, Isonox und andere.

Für ein optimales Aufschmelzen der Schmelzschicht können Energie absorbierende Zusatzstoffe, vorzugsweise Licht und/oder Strahlung sowie Wärme absorbierende Zusatzstoffe z. B. Laserpigmente, mineralische Füllstoffe oder Metallpartikel eingesetzt werden. Dieses hat den Vorteil, dass die Energieabsorption und damit das Aufschmelzverhalten der Schmelzschicht gezielt auf die Energiequelle z. B. Wellenlänge der Laserstrahlung abgestimmt werden kann.

Eine weitere Ausführung betrifft eine Kantenleiste nach einer der vorgenannten Ausführungen, wobei auf die Schmelzschicht der Kantenleiste eine flüssige Beschichtung aufgetragen wird, die Energie absorbierenden Zusatzstoffe enthält und thermisch und/oder chemisch getrocknet bzw. vernetzt wird. Die flüssige Beschichtung kann dafür sowohl vollflächig als auch nur in Teilflächen oder Bereichen auf die Schmelzschicht erfolgen. Damit können gezielt, räumlich definierte Bereiche der Schmelzschicht mit der Energiequelle bei der Verarbeitung aufgeschmolzen werden, so dass der Verbund zwischen Kantenleiste und Möbelplatte ebenfalls positionsgenau definierbar ist.

Zur besseren Anbindung und zur gleichzeitigen Steigerung der Haftungskräfte der Kantenleiste an Holzwerkstoffen kann die Schmelzschicht bekannterweise mit Additiven mit funktionalen Gruppen oder polaren Gruppen, wie z. B. Maleinsäureanhydrid oder auf Basis von Isocyanat versetzt werden. Vorzugsweise werden zur besseren Anbindung und zur gleichzeitigen Steigerung der Haftungskräfte der Kantenleiste an Holzwerkstoffen solche Additive der Schmelzschicht zugesetzt, die keine polaren Gruppen aufweisen.

In einer besonders bevorzugten Ausführungsform umfasst die Schmelzschicht aber nur solche zusätzlichen Komponenten, die nicht die Funktion haben, die Verbindung der Kantenleiste mit der Holzwerkstoffplatte zu verbessern, d.h. die Haftungskräfte der Kantenleiste an die Holzwerkstoffe zu steigern. Mit der Zusammensetzung der Schmelzschicht der erfindungsgemäßen Kantenleiste auf Basis leicht fließender Polymere wird bereits eine gegenüber herkömmlichen Kantenleisten verbesserte Haftung an Holzwerkstoffplatten erreicht.

Die erfindungsgemäße Kantenleiste kann einschichtig ausgebildet sein. In einer alternativen Ausführungsform umfasst die erfindungsgemäße Kantenleiste zwei oder mehr Schichten. In einer bevorzugten Ausführungsform weist die erfindungsgemäße Kantenleiste neben der Schmelzschicht eine Oberschicht auf. Diese Oberschicht kann beispielsweise als Dekorschicht ausgebildet sein. In einer besonders bevorzugten Ausführungsform umfasst die Oberschicht ein Homo- oder Copolymer von Propylen. In einer ganz besonders bevorzugten Ausführungsform stellt die Erfindung eine Kantenleiste bereit, die eine Oberschicht umfasst, die aus mindestens einem thermoplastischen Polyolefin besteht bzw. deren Polymerbasis aus mindestens einem thermoplastischen Polyolefin besteht und die optional weitere Komponenten, insbesondere in Form von Pigmenten, Füllstoffen, Additiven umfasst.

Bei der Verarbeitung von Kantenleisten bei Möbelteilen mit Radien wurde erkannt, dass die hohe Steifigkeit thermoplastischer Kantenmaterialien eher störend ist, und zwar durch relativ hohe Rückstellkräfte der Kante. Eine geschlossene Fuge zwischen Holzwerkstoffplatte und Kante kann daher nur in einem begrenzten Bereich gemäß Stand der Technik erreicht werden. Um die Steifigkeit der Kante im Verarbeitungsprozess gezielt zu reduzieren, werden in der Oberschicht der Kantenleiste energieabsorbierende Zusatzstoffe beigegeben, die zu einer definierten Wärmeaufnahme und damit Temperaturerhöhung des thermoplastischen Oberschichtmaterials führen. Mit Hilfe dieser ergänzenden Beigabe energieabsorbierender Materialien, die auch in Form einer Beschichtung erfolgen kann, wird die Steifigkeit der gesamten Kante im Verarbeitungsprozess insbesondere für die Verarbeitung in Radien verbessert und eine leichtere Verformung der Kantenleiste geschaffen.

In einer bevorzugten Ausführungsform der Erfindung sind deshalb auch den oberen Schichten für eine optimale Absorption von Laserstrahlung und Umwandlung der Laserstrahlung in Wärmeenergie bzw. Absorption von zugeführter Plasmaenergie Energie-absorbierenden Zusatzstoffe und Pigmente, vorzugsweise Licht und/oder Strahlung sowie Wärme absorbierende Zusatzstoffe, mineralische Füllstoffe oder Metallpartikel zugesetzt.

Vorzugsweise handelt es sich bei dem thermoplastischen Polyolefin in der Oberschicht um ein Homo- oder Copolymer aus Ethylen, Propylen und/oder Butylen. Am stärksten bevorzugt handelt es sich bei dem thermoplastischen Polyolefin um ein Homopolymer aus Propylen oder um ein Copolymer aus Polypropylen und Polyethylen.

Die Erfindung stellt demnach eine Kantenleiste bereit, die als mehrschichtige, klebstofffreie Kantenleiste über eine im Schmelze-Zustand extrem leicht fließende Schmelzschicht verfügt, die eine vergleichbare Härte und Schmelztemperatur zu den anderen Schichten besitzen kann, so dass die gesamte Kantenleiste eine konstante Härte und Schmelztemperatur aufweist. Diese Schicht ist durch Energiezufuhr durch z. B. Laserstrahlung oder Plasma aufschmelzbar, so dass die Kantenleiste an Möbelplatten ohne Klebstoffzugabe befestigt werden kann. Die Schmelzschicht ist bei einer Ausgestaltung der Erfindung eingefärbt.

Alternativ stellt die Erfindung aber auch eine Kantenleiste bereit, die als mehrschichtige, klebstofffreie Kantenleiste über eine im Schmelze-Zustand extrem leicht fließende Schmelzschicht verfügt, die eine geringere Härte und Schmelztemperatur zu den anderen Schichten besitzen kann. Wenn die Oberschicht einer solchen Kantenleist eine möglichst hohe Härte aufweist, hat dies Vorteile in Bezug auf die Dauergebrauchseigenschaften der Kantenleiste, wie beispielsweise eine gut Kratzfestigkeit. Die Vorteile einer Schmelzschicht, die elastischer ist und eine geringere Schmelztemperatur aufweist, wurden oben bereits diskutiert.

Die Kantenleiste besteht bei einem Ausführungsbeispiel aus eingefärbten, thermoplastischen Kunststoff.

Ferner sind so genannte Durchmaserungs-Effekte in den Schichten möglich. Durchmaserungseffekte werden bekannterweise durch Coextrusion des gleichen Polymers in andersfarbiger Einstellung oder durch eine inhomogene Farbmittelverteilung erzeugt. Die andersfarbige, streifige Verteilung optimiert die optische Reproduktion von Holzdekoren.

Eine weitere bevorzugte Ausführung der Erfindung betrifft eine zwei- oder mehrschichtige Kantenleiste, die durch Coextrusion gefertigt wird. Die Coextrusion der Schmelzschicht kann sowohl in einem Prozeß unmittelbar mit der Extrusion der anderen Schichten und/oder durch eine nachträgliche Post-Coextrusion erfolgen.

Vorteilhaft stellte sich auch eine Laminierung der Schmelzschicht in einem zweistufigen Prozeß dar. Im ersten Fertigungsschritt wird die Schmelzschicht als Folie extrudiert. Anschließend erfolgt die Laminierung dieser Folie auf die Rückseite der Kantenleiste. Der feste Verbund der Schichten bei dieser Laminierung wird durch Temperatur und Druck in einem Glättwerk erzeugt.

Ferner kann die Schmelzschicht durch eine flüssige (Nach)-Beschichtung, die durch Vernetzung oder Trocknung oder Abkühlung der vorher aufgeschmolzenen Polymerbasis fest wird, erzeugt werden. Eine solche zwei- oder mehrschichtige Ausführung besitzt den Vorteil, dass die Schmelzschicht, die Zwischenschichten und die Oberschicht getrennt nach ihren Funktionen formuliert werden können. Die Zwischenschichten können als Haftungsvermittler zwischen unverträglichen, durch Coextrusion nicht kombinierbaren Polymeren (z. B. zwischen ABS und PP) fungieren.

Die Erfindung schlägt bevorzugt eine zweischichtige Kantenleiste vor, bestehend aus einer Oberschicht der o. g. Polymeren sowie einer coextrudierten Schmelzschicht, die auf einem leicht fließenden Polymer gleicher chemischer Basis wie oben definiert, basiert.

In der Oberschicht und in der Schmelzschicht kann die gleiche Polymerbasis verwendet werden. Dadurch ist es möglich, das Zerspanungsverhalten, die Härte und die Erweichungstemperatur der gesamten Kantenleiste sehr homogen einzustellen, so dass visuell keine Unterschiede in Farbe, Glanz und/oder Struktur im Ergebnis der spanenden Bearbeitung der Kantenleiste nach der Befestigung an der Möbelplatte erkennbar sind.

Eine weitere Ausführungsform betrifft eine Kantenleiste nach einer der vorgenannten Ausführungen, wobei auf die Schmelzschicht der Kantenleiste eine flüssige Beschichtung aufgetragen wird, die Energie absorbierenden Zusatzstoffe enthält und thermisch und/oder chemisch getrocknet bzw. vernetzt wird. Die flüssige Beschichtung kann dafür sowohl vollflächig als auch nur in Teilflächen oder Bereichen auf die Schmelzschicht erfolgen. Damit können gezielt, räumlich definierte Bereiche der Schmelzschicht mit der Energiequelle bei der Verarbeitung aufgeschmolzen werden, so dass der Verbund zwischen Kantenleiste und Möbelplatte ebenfalls positionsgenau definierbar ist.

Eine weitere bevorzugte Ausführungsform der Erfindung betrifft eine Kantenleiste nach einer der vorgenannten Ausführungen, wobei die Schmelzschicht mit einem Haftvermittler beschichtet ist. Unter einem Haftvermittler wird ein flüssiges Stoffgemisch verstanden, dass die Hauptkomponenten Wasser und/oder organischen Lösungsmitteln, Bindemittel (z. B. EVA, PUR, PVC) sowie mineralische Füllstoffe (z. B. Kieselsäure) enthält. Zur Steigerung der Haftungs-Eigenschaften können zusätzlich Vernetzer (z. B. Isocyanate) zugegeben werden.

Die vorliegende Erfindung betrifft auch eine Möbelplatte, die mit einer der oben beschriebenen Kantenleisten stoffschlüssig und/oder formschlüssig verbunden ist. Eine solche Möbelplatte besteht vorzugsweise aus Holz, Holzwerkstoffen oder Holzersatzstoffen. Alternativ kann eine solche Möbelplatte auch aus Kunststoff, Metall, ein oder mehreren Gläsern, Stein, Keramik oder Kombinationen davon bestehen.

Die Herstellung einer erfindungsgemäßen Kantenleiste kann beispielsweise durch Extrusion bzw. Koextrusion erfolgen.

Eine erfindungsgemäße Kantenleiste kann auch dadurch realisiert werden, dass auf eine bereits vorhandene Kantenleiste, die noch keine Schmelzschicht aufweist, eine erfindungsgemäße Schmelzschicht aufgebracht wird, d.h. eine Schmelzschicht, die aus mindestens einem thermoplastisches Polyolefin besteht, um diese so mit einer Möbelplatte verschweißbar zu machen.

Die Erfindung wird durch die folgenden Beispiele und Zeichnungen noch näher erläutert.

Die Figuren 1 bis 3 zeigen eine erfindungsgemäße Kantenleiste, die auf eine Holzwerkstoffplatte 3 aufgebracht worden ist. Bei der Holzwerkstoffplatte 3 handelt es sich um eine MDF-Platte. Die Kantenleiste umfasst eine Oberschicht 1 und eine Schmelzschicht 2. In die Holzwerkstoffplatte 3 wurde zur Bestimmung der Eindringtiefe der geschmolzenen Schmelzschicht 2 (siehe Beispiel 6) eine Nut 4 (0,9 x 2,0 mm) eingefräst.

### Beispiele 1 bis 5

Es wurden acht eingefärbte Kantenleisten als zweischichtige Kantenleisten ausgebildet, die eine Oberschicht und eine Schmelzschicht umfassen.
PP-Kante:
Oberschicht:
PP-Homoplymer
mit/ohne PP-Copolymer (PP/PE)
mit/ohne TPE Elastomere
mit/ohne Füllstoffe (Kreide, Talkum, Wollastonite, Kaolin)
mit/ohne Pigmente
mit/ohne Additive

Funktionsschicht:
1. Beispiel

| | |
|---|---|
| 90% | PP-homopolymer MFI 1200 |
| 10% | Pigmente / Additive (IR-Absorber) |

2. Beispiel

| | |
|---|---|
| 50% | PP-homopolymer MFI 1200 |
| 40% | PP-homopolymer MFI 100 |
| 10% | Pigmente / Additive |

3. Beispiel

| | |
|---|---|
| 30% | PP-homopolymer MFI 1200 |
| 60% | PP-homopolymer MFI 100 |
| 10% | Pigmente / Additive |

4. Beispiel

| | |
|---|---|
| 10% | PP-homopolymer MFI 1200 |
| 80% | PP-homopolymer MFI 100 |
| 10% | Pigmente / Additive |

5. Beispiel

| | |
|---|---|
| 30% | PP-homopolymer MFI 1200 |
| 40% | PP-homopolymer MFI 100 |
| 20% | PP/PE-Copopolymer |
| 10% | Pigmente / Additiv |

6. Beispiel

| | |
|---|---|
| 9% | PP-homopolymer MFI 1200 |
| 81% | PP-homopolymer MFI 120 |
| 10% | Pigmente / Additive |

7. Beispiel

| | |
|---|---|
| 22,5% | PP-homopolymer MFI 1200 |
| 67,5% | PP-homopolymer MFI 120 |
| 10% | Pigmente / Additive |

8. Beispiel

| | |
|---|---|
| 45% | PP-homopolymer MFI 1200 |
| 45% | PP-homopolymer MFI 120 |
| 10% | Pigmente / Additiv |

### Beispiel 6: Korrelation des MFI der Schmelzschicht zu den Eigenschaften Fließweg und Haftung

Die Kunststoffkanten 1 bis 3 wurden gemäß der in Tabelle 1 dargestellten Rezepturen der Schmelzschicht gefertigt. Die Dicke der Schmelzschicht beträgt ca. 0,2 mm. Neben den aufgeführten Polymeren wurde die Schmelzschicht mittels Pigmenten weiß eingefärbt und mittels eines IR-Absorbers additiviert. Die Verarbeitung der Kante erfolgte auf einer Kantenanleimmaschine mit einem Dioden-Laser-Aggregat mit einer Leistung von 25 J/cm².

**Tabelle 1 - Rezepturen der Schmelzschichten**

| | **Rezeptur der Funktionsschicht** | | |
|---|---|---|---|
| Rezeptur Nr. | PP-Polymer | MFI (230 °C/2,16 kg) nach ISO 1133 [g/10min] der eingesetzten Polymere | Mischungsverhältnis |
| 1 | A | 1.200 | 10 |
| | B | 120 | 90 |
| 2 | A | 1.200 | 25 |
| | B | 120 | 75 |
| 3 | A | 1.200 | 50 |
| | B | 120 | 50 |

Tabelle 2 zeigt die Ergebnisse der Prüfung der Fließtiefe der Schmelzschicht und und eines Rollenschälversuchs. Zur Prüfung der Fließtiefe wurden Querschnitte gemäß der Figuren 1 bis 3 angefertigt und im Auflichtmikroskop mit optischer Skalierung untersucht.
Figur 1 zeigt einen Querschnitt durch eine Kantenleiste, deren Schmelzschicht 2 auf Basis der Rezeptur Nr. 1 (siehe Tabelle) hergestellt wurde.
Figur 2 zeigt einen Querschnitt durch eine Kantenleiste, deren Schmelzschicht 2 auf Basis der Rezeptur Nr. 2 (siehe Tabelle) hergestellt wurde.
Figur 3 zeigt einen Querschnitt durch eine Kantenleiste, deren Schmelzschicht 2 auf Basis der Rezeptur Nr. 3 (siehe Tabelle) hergestellt wurde.

Bei der Holzwerkstoffplatte 3 in den Figuren 1 bis 3 handelt es sich um eine 19 mm dicke MDF-Platte.

Die Darstellung der Figuren 1 bis 3 ist nicht maßstabsgerecht.

Alle Versuche wurden 3fach bzw. mit je drei parallelen Proben durchgeführt. Die in Tabelle 2 dargestellten Ergebnisse repräsentieren jeweils die Mittelwerte der 3fach-Untersuchungen

**Tabelle 2: Testergebnisse**

| | **Fließtiefe** | | **Rollenschälversuch (100mm/min)** | |
|---|---|---|---|---|
| Rezeptur Nr. | max. Eindringtiefe (0,9 x 2,0 mm Nut in MDF - Platte) [mm] | Verfüllungsgrad Nut [%] | Mittelwert Abzugskraft Spanplatte [N] | Mittelwert Abzugskraft MDF - Platte [N] |
| 1 | 0,82 | 80 | 47 | 46,5 |
| 2 | 0,85 | 90 | 56 | 83,0 |
| 3 | 0,90 | 100 | 66 | 197,5 |

Es ist deutlich erkennbar, dass mit Polymeren unterschiedlicher MFI-Werte sowohl die Eindringtiefe als auch die Haftung der Kante zur Platte beeinflusst bzw. gesteuert werden kann. Mit steigenden (Mischungs-) MFI werden sowohl die Fließtiefen als auch die Haftungseigenschaften erhöht und damit verbessert.

Die Verbesserung der Haftung wird besonders deutlich bei Verwendung von MDF-Platten als Trägermaterial. Eine höhere Fließtiefe besitzt den Vorteil, dass die in der Praxis in der Regel vorhandenen Risse im Deckmaterial der Platte durch das eingeflossene Funktionsschicht-Material besser verfüllt werden. Dies war bei den in den Figuren 2 und 3 dargestellten Versuchen gut zu beobachten, bei denen der Hohlraum 5 der Nut 4 besser (Figur 2) oder ganz (Figur 3) verfüllt wurde. Dadurch wird die Wasser- und Wasserdampf-Beständigkeit der bekanteten Platten erhöht und damit die Gefahr von Quellungen der Holzwerkstoffplatten reduziert. Gleichzeitig nimmt die Rest-Dicke der Schmelzschicht mit steigendem (Mischungs-) MFI durch das verbesserte Fließen der Schmelzschicht zum Teil deutlich ab (siehe Abnahme der Dicke der Schmelzschicht 2 in Figuren 2 und 3 gegenüber Figur 1). Dabei war die Entstehung einer größeren "Schmelzewulst" zwischen Platte und Kante zu beobachten, die sich wiederum vorteilhaft auf die Abdichtung der Platte durch die Kante auswirkt.

### Liste der Bezugszeichen

- 1: Oberschicht
- 2: Schmelzschicht
- 3: Holzwerkstoffplatte
- 4: Nut
- 5: Hohlraum

## Patentansprüche

1. Kantenleiste, insbesondere für Möbelplatten, umfassend eine Schmelzschicht, die aus mindestens einem leicht fließenden Polyolefin und optional aus weiteren Komponenten, die ausgewählt sind aus der Gruppe Pigmente, Füllstoffe und Additive, besteht, **dadurch gekennzeichnet, dass** das mindestens eine leicht fließende Polyolefin ausgewählt ist aus
• Copolymeren des Propylens; oder
• einer Kombination aus Homopolypropylenen mit unterschiedlichen Schmelzflußindices (MFI); oder
• einer Kombination aus Copolymeren des Propylens; oder
• einer Kombination von Homopolypropylenen und Copolymeren des Propylens,
wobei das leicht fließende Polyolefin nur aus unpolaren Monomeren aufgebaut ist und einen Schmelzflußindex (MFI) von 100 g/10 min (nach ISO 1133, 230°C, 2,16 kg) oder höher aufweist und das Homopolypropylen einen Schmelzflußindex (MFI) von 100 g/10 min (nach ISO 1133, 230°C, 2,16 kg) oder höher aufweist.

2. Kantenleiste nach Anspruch 1, **dadurch gekennzeichnet, dass** das leicht fließende Polyolefin ausgewählt ist aus einer Kombination von mindestens zwei Homopolypropylenen oder einer Kombination von mindestens zwei Copolymeren des Propylens oder einer Kombination von mindestens einem Homopolypropylen und mindestens einem Copolymer des Propylens, wobei die in dieser Kombination enthaltenen verschiedenen Homopolypropylene und Copolymere des Propylens unterschiedliche Schmelzflußindices (MFI) aufweisen, wobei die Homopolypropylene Schmelzflußindices im Bereich von 100 g/10 min bis 1500 g/10 min, vorzugsweise im Bereich von 100 g/ 10 min bis 1200 g/10 min (nach ISO 1133, 230°C, 2,16 kg) aufweisen.

3. Kantenleiste nach einem der Ansprüche 1 bis 2, **dadurch gekennzeichnet, dass** das leicht fließende Polyolefin ausgewählt ist aus einer Kombination von mindestens einem Homopolypropylen und mindestens einem Copolymer des Propylens, wobei die in dieser Kombination enthaltenen verschiedenen Homopolypropylene und Copolymere des Propylens unterschiedliche Schmelzflußindices (MFI) aufweisen, wobei die Copolymere des Propylens Schmelzflußindices von 3 g/10 min oder höher, vorzugsweise 50 g/10 min oder höher (nach ISO 1133, 230°C, 2,16 kg) aufweisen.

4. Kantenleiste nach einem der vorherigen Ansprüche, **dadurch gekennzeichnet, dass** das Elastizitätsmodul der Schmelzschicht 1400 MPa oder geringer, vorzugsweise 1200 MPa oder geringer ist; und/oder dass die Schmelztemperatur der Schmelzschicht 160°C oder geringer, vorzugsweise 150 °C oder geringer ist.

5. Kantenleiste nach einem der vorhergehenden Ansprüchen, **dadurch gekennzeichnet, dass** die Kantenleiste eine mit der Schmelzschicht verbundene Oberschicht aufweist.

6. Kantenleiste nach einem der vorhergehenden Ansprüche, **dadurch gekennzeichnet dass** die Oberschicht aus einem Polyolefin, das ausgewählt ist aus Homopolypropylen oder Copolymeren des Propylens oder einer Kombination aus diesen, und optional weiteren Komponenten, die ausgewählt sind aus Pigmenten, Füllstoffen, Additiven, besteht; und/oder dass die Schmelzschicht weitere Komponenten, insbesondere in Form von Pigmenten, Füllstoffen, Additiven, umfasst.

7. Kantenleiste nach einem der vorhergehenden Ansprüche, **dadurch gekennzeichnet, dass** die Schmelzschicht eine vergleichbare Härte und Schmelztemperatur zu den anderen Schichten besitzt, so dass die gesamte Kantenleiste eine konstante Schmelztemperatur aufweist.

8. Kantenleiste nach einem der vorhergehenden Ansprüche, **dadurch gekennzeichnet, dass** die Dicke der Kantenleiste vorzugsweise im Bereich von im Wesentlichen 0,3 bis 4 mm liegt und die sichtbare Oberseite geprägt und/oder bedruckt und/oder lackiert und/oder mit einer Kunststoff- bzw. Metallfolie laminiert ist und/oder dass die Schmelzschicht nach dem Aufbringen der Kantenleiste auf eine Holzwerkstoffplatte, insbesondere eine Möbelplatte, eine Rest-Dicke von >0,02 mm, vorzugsweise >0,05 mm aufweist.

9. Kantenleiste nach einem der vorhergehenden Ansprüche, **dadurch gekennzeichnet, dass** diese Durchmaserungen, enthalten durch Coextrusion des gleichen Polymers in andersfarbiger Einstellung oder durch eine inhomogene Farbmittelverteilung, aufweist.

10. Kantenleiste nach einem der vorhergehenden Ansprüche, **dadurch gekennzeichnet, dass** diese zwei- oder mehrschichtig durch Coextrusion gefertigt ist, wobei die Coextrusion der Schmelzschicht sowohl in einem Prozess unmittelbar mit der Extrusion der anderen Schichten und/oder durch eine nachträgliche Post-Coextrusion und/oder durch eine Laminierung der Schmelzschicht als Folie auf die anderen Schichten erfolgen kann;
oder
dass die Kantenleiste zwei- oder mehrschichtig gefertigt ist, wobei die Schmelzschicht durch eine flüssige (Nach)-Beschichtung erzeugt wird, die durch Vernetzung oder Trocknung oder Abkühlung der vorher aufgeschmolzenen Polymerbasis der Schmelzschicht verfestigt wird.

11. Kantenleiste nach einem der vorhergehenden Ansprüche, **dadurch gekennzeichnet, dass** bei einer mehrschichtigen Ausführung mindestens eine Zwischenschicht als Haftvermittler zwischen der Schmelzschicht und den oberen Schichten vorhanden ist.

12. Kantenleiste nach einem der vorhergehenden Ansprüche, **dadurch gekennzeichnet, dass** für eine optimale Absorption von zugeführter Plasmaenergie, Laserstrahlung oder Heißluft Energie absorbierende Zusatzstoffe und Pigmente, vorzugsweise Licht und/oder Strahlung sowie Wärme absorbierende Zusatzstoffe, mineralische Füllstoffe oder Metallpartikel der Schmelzschicht zugesetzt sind.

13. Kantenleiste nach einem der vorhergehenden Ansprüche, **dadurch gekennzeichnet, dass** auf die Schmelzschicht der Kantenleiste eine flüssige Beschichtung aufgetragen wird, die Energie absorbierenden Zusatzstoffe und Pigmente, vorzugsweise Licht und/oder Strahlung sowie Wärme absorbierende Zusatzstoffe, mineralische Füllstoffe oder Metallpartikel umfasst und thermisch und/oder chemisch getrocknet bzw. vernetzt wird.

14. Kantenleiste nach einem der vorhergehenden Ansprüche, **dadurch gekennzeichnet, dass** die Schmelzschicht mit einem Haftvermittler versehen ist, welcher aus einem flüssigen Stoffgemisch besteht, dass die Hauptkomponenten Wasser und/oder organische Lösungsmittel, Bindemittel sowie mineralische Füllstoffe umfasst.

15. Möbelplatte mit einer Kantenleiste nach einem der vorhergehenden Ansprüche, **dadurch gekennzeichnet, dass** die Schmelzschicht abschnittsweise oder vollflächig mit der Kante des Möbelstücks stoffschlüssig verbunden ist.

16. Möbelplatte nach Anspruch 15, **dadurch gekennzeichnet, dass** die Werkstoffe der Möbelplatte aus Holz, Holzwerkstoffen, Holzersatzstoffen, Kunststoff, Metall, Gläser, Stein, Keramik oder Kombinationen davon besteht.

## Claims

1. Edging strip, in particular for furniture panels, comprising a melt layer which is composed of at least one free-flowing polyolefin and optionally of other components selected from the group of pigments, fillers and additives, **characterized in that** the at least one free-flowing polyolefin is selected from:
• copolymers of propylene, or
• a combination of homopolypropylenes with different melt flow indices (MFI); or
• a combination of copolymers of propylene; or
• a combination of homopolypropylenes and copolymers of propylene,
where the free-flowing polyolefin is composed only of nonpolar monomers and has a melt flow index (MFI) of 100 g/10 min (in accordance with ISO 1133, 230°C, 2.16 kg) or greater, and the melt flow index (MFI) of the homopropylene is 100 g/10 min (in accordance with ISO 1133, 230°C, 2.16 kg) or greater.

2. Edging strip according to Claim 1, **characterized in that** the free-flowing polyolefin is selected from a combination of at least two homopolypropylenes or a combination of at least two copolymers of propylene or a combination of at least one homopolypropylene and at least one copolymer of propylene, where the various homopolypropylenes and copolymers of propylene present in said combination have different melt flow indices (MFI), where the melt flow indices of the homopolypropylenes are in the range from 100 g/10 min to 1500 g/10 min, preferably in the range from 100 g/10 min to 1200 g/10 min (in accordance with ISO 1133, 230°C, 2.16 kg).

3. Edging strip according to any of Claims 1 to 2, **characterized in that** the free-flowing polyolefin is selected from a combination of at least one homopolypropylene and at least one copolymer of propylene, where the various homopolypropylenes and copolymers of propylene present in said combination have different melt flow indices (MFI), where the melt flow indices of the copolymers of propylene are 3 g/10 min or greater, preferably 50 g/10 min or greater (in accordance with ISO 1133, 230°C, 2.16 kg).

4. Edging strip according to any of the preceding claims, **characterized in that** the modulus of elasticity of the melt layer is 1400 MPa or less, preferably 1200 MPa or less **in that** the melting point of the melt layer is 160°C or below, preferably 150°C or below.

5. Edging strip according to any of the preceding claims, **characterized in that** the edging strip has an upper layer bonded to the melt layer.

6. Edging strip according to any of the preceding claims, **characterized in that** the upper layer is composed of a polyolefin selected from homopolypropylene or copolymers of propylene or a combination of these, and optionally of other components selected from pigments, fillers, and additives and/or **in that** the melt layer comprises other components, in particular in the form of pigments, fillers, and additives.

7. Edging strip according to any of the preceding claims, **characterized in that** the hardness and melting point of the melt layer is comparable to those of the other layers, and the entire edging strip therefore has a constant melting point.

8. Edging strip according to any of the preceding claims, **characterized in that** the thickness of the edging strip is preferably in the range of in essence from 0.3 to 4 mm and the visible upper side has been laminated with a plastics foil or with a metal foil, and/or has been embossed and/or printed and/or coated and/or **in that**, after application of the edging strip to a wood-based panel, in particular a furniture panel, the residual thickness of the melt layer is > 0.02 mm, preferably > 0.05 mm.

9. Edging strip according to any of the preceding claims, **characterized in that** this has bulk patterning present by virtue of coextrusion of the same polymer in a differently colored formulation or via inhomogeneous colorant distribution.

10. Edging strip according to any of the preceding claims, **characterized in that** this has been manufactured in the form of two or more layers by coextrusion, where the coextrusion of the melt layer can take place in a process directly with the extrusion of the other layers and/or via subsequent post-coextrusion and/or via lamination of the melt layer as foil onto the other layers;
or
**in that** the edging strip has been manufactured in the form of two or more layers, where the melt layer is produced via a liquid (post)-coating which is hardened via crosslinking or drying or cooling of the previously melted polymer basis of the melt layer.

11. Edging strip according to any of the preceding claims, **characterized in that** in the case of a multilayer embodiment there is at least one intermediate layer in the form of adhesion promoter present between the melt layer and the upper layers.

12. Edging strip according to any of the preceding claims, **characterized in that**, for ideal absorption of plasma energy introduced, laser radiation or hot air, pigments and additional substances that absorb energy have been added to the melt layer, preferably additional substances that absorb light and/or radiation and/or heat, mineral fillers or metal particles.

13. Edging strip according to any of the preceding claims, **characterized in that** a liquid coating is applied onto the melt layer of the edging strip and comprises pigments and additional substances that absorb energy, preferably additional substances that absorb light and/or radiation and/or heat, mineral fillers or metal particles, and is thermally and/or chemically dried and, respectively, crosslinked.

14. Edging strip according to any of the preceding claims, **characterized in that** an adhesion promoter has been provided to the melt layer and is composed of a liquid mixture comprising the main components water and/or organic solvents, binders and mineral fillers.

15. Furniture panel with an edging strip according to any of the preceding claims, **characterized in that**, in some sections or over the entire surface there is a coherent bond between the melt layer and the edge of the furniture panel.

16. Furniture panel according to Claim 15, **characterized in that** the materials of the furniture panel are composed of wood, wood-based materials, wood-substitute materials, plastic, metal, glasses, stone, ceramic or a combination thereof.

## Revendications

1. Bande de chant, en particulier pour des plaques de meubles, comprenant une couche fusible qui se compose d'au moins une polyoléfine facilement fluide et en option de composants supplémentaires qui sont choisis parmi le groupe des pigments, des charges et des additifs, **caractérisée en ce que** l'au moins une polyoléfine facilement fluide est choisie parmi
- des copolymères du propylène ; ou
- une combinaison d'homopolypropylènes ayant des indices de fluidité à chaud (MFI) différents ; ou
- une combinaison de copolymères du propylène ; ou
- une combinaison d'homopolypropylènes et de copolymères du propylène,
la polyoléfine facilement fluide étant constituée seulement de monomères non polaires et présentant un indice de fluidité à chaud (MFI) de 100 g/10 min (selon ISO 1133, 230°C, 2,16 kg) ou plus, et l'homopolypropylène présentant un indice de fluidité à chaud (MFI) de 100 g/10 min (selon ISO 1133, 230°C, 2,16 kg) ou plus.

2. Bande de chant selon la revendication 1, **caractérisée en ce que** la polyoléfine facilement fluide est choisie parmi une combinaison d'au moins deux homopolypropylènes ou une combinaison d'au moins deux copolymères du propylène ou une combinaison d'au moins un homopolypropylène et d'au moins un copolymère du propylène, les différents homopolypropylènes et copolymères du propylène contenus dans cette combinaison présentant des indices de fluidité à chaud (MFI) différents, les homopolypropylènes présentant des indices de fluidité à chaud dans la plage de 100 g/10 min à 1500 g/10 min, de préférence dans la plage de 100 g/10 min à 1200 g/10 min (selon ISO 1133, 230°C, 2,16 kg).

3. Bande de chant selon l'une quelconque des revendications 1 à 2, **caractérisée en ce que** la polyoléfine facilement fluide est choisie parmi une combinaison d'au moins un homopolypropylène et d'au moins un copolymère du propylène, les différents homopolypropylènes et copolymères du propylène contenus dans cette combinaison présentant des indices de fluidité à chaud (MFI) différents, les copolymères du propylène présentant des indices de fluidité à chaud de 3 g/10 min ou plus, de préférence de 50 g/10 min ou plus (selon ISO 1133, 230°C, 2,16 kg).

4. Bande de chant selon l'une quelconque des revendications précédentes, **caractérisée en ce que** le module d'élasticité de la couche fusible est de 1400 MPa ou moins, de préférence de 1200 MPa ou moins ; et/ou **en ce que** la température de fusion de la couche fusible est de 160°C ou moins, de préférence de 150°C ou moins.

5. Bande de chant selon l'une quelconque des revendications précédentes, **caractérisée en ce que** la bande de chant présente une couche supérieure connectée à la couche fusible.

6. Bande de chant selon l'une quelconque des revendications précédentes, **caractérisée en ce que** la couche supérieure se compose d'une polyoléfine choisie parmi l'homopolypropylène ou des copolymères du propylène ou d'une combinaison de ceux-ci, et en option de composants supplémentaires, qui sont choisis parmi le groupe des pigments, des charges et des additifs ; et/ou **en ce que** la couche fusible comprend des composants supplémentaires, en particulier sous la forme de pigments, de charges, d'additifs.

7. Bande de chant selon l'une quelconque des revendications précédentes, **caractérisée en ce que** la couche fusible possède une dureté comparable et une température de fusion comparable aux autres couches, de telle sorte que l'ensemble de la bande de chant présente une température de fusion constante.

8. Bande de chant selon l'une quelconque des revendications précédentes, **caractérisée en ce que** l'épaisseur de la bande de chant est comprise de préférence dans une plage de sensiblement 0,3 à 4 mm et le côté supérieur visible est gaufré et/ou imprimé et/ou vernis et/ou stratifié avec une feuille de matière plastique ou de métal et/ou **en ce que** la couche fusible présente, après l'application de la bande de chant sur une plaque en matériau à base de bois, notamment une plaque de meuble, une épaisseur résiduelle > 0,02 mm, de préférence > 0,05 mm.

9. Bande de chant selon l'une quelconque des revendications précédentes, **caractérisée en ce que** celle-ci présente des veinures traversantes, obtenues par coextrusion du même polymère dans des réglages de colorants différents ou par une répartition de colorants inhomogène.

10. Bande de chant selon l'une quelconque des revendications précédentes, **caractérisée en ce que** celle-ci est fabriquée en deux ou plus de deux couches par coextrusion, la coextrusion de la couche fusible pouvant s'effectuer à la fois dans un processus directement avec l'extrusion des autres couches et/ou par une post-coextrusion ultérieur et/ou par une stratification de la couche fusible en tant que film sur les autres couches ;
ou
**en ce que** la bande de chant est fabriquée en deux ou plus de deux couches, la couche fusible étant produite par un (post)-revêtement fluide, qui est solidifié par réticulation ou séchage ou refroidissement de la base polymère fondue de la couche fusible.

11. Bande de chant selon l'une quelconque des revendications précédentes, **caractérisée en ce que** dans le cas d'une réalisation multicouche, au moins une couche intermédiaire est prévue en tant que promoteur d'adhésion entre la couche fusible et les couches supérieures.

12. Bande de chant selon l'une quelconque des revendications précédentes, **caractérisée en ce que** pour une absorption optimale de l'énergie de plasma introduite, du rayonnement laser ou de l'air chaud, on ajoute à la couche fusible des additifs et des pigments absorbant de l'énergie, de préférence des additifs absorbant la lumière et/ou le rayonnement ainsi que la chaleur, des charges minérales ou des particules métalliques.

13. Bande de chant selon l'une quelconque des revendications précédentes, **caractérisée en ce que** l'on applique sur la couche fusible de la bande de chant un revêtement fluide, qui comprend des additifs et des pigments absorbant de l'énergie, de préférence des additifs absorbant la lumière et/ou le rayonnement ainsi que la chaleur, des charges minérales ou des particules métalliques, et on le soumet à un séchage ou à une réticulation thermique et/ou chimique.

14. Bande de chant selon l'une quelconque des revendications précédentes, **caractérisée en ce que** la couche fusible est pourvue d'un promoteur d'adhésion qui se compose d'un mélange de substances fluide, **en ce que** le composant principal comprend de l'eau et/ou des solvants organiques, des liants ainsi que des charges minérales.

15. Plaque de meuble comprenant une bande de chant selon l'une quelconque des revendications précédentes, **caractérisée en ce que** la couche fusible est connectée en partie ou sur toute la surface par liaison de matière au chant du meuble.

16. Plaque de meuble selon la revendication 15, **caractérisée en ce que** les matériaux de la plaque de meuble sont le bois, des matériaux à base de bois, des matériaux de remplacement du bois, des matières plastiques, du métal, des verres, de la pierre, de la céramique ou des combinaisons de ceux-ci.
